# EUROPEAN PATENT APPLICATION

(11) **EP 4 575 568 A1**
(43) Date of publication of application: **25.06.2025**
(21) Application number: 24217902.6
(22) Date of filing: 05.12.2024
(51) Int. Cl.: G01S 7/497, G01S 13/86, G01S 13/931, G01S 17/86, G01S 17/931

(54) **METHOD FOR SENSING SYNCHRONIZATION BETWEEN PLURALITY OF TYPES OF SENSORS AND CONTROL SYSTEM**

(30) Priority: 20.12.2023 CN 202311766694
(71) Applicant: Nio Smart Technology (Shenzhen) Co., Ltd, Shenzhen, 518052 (CN); Nio Co., Ltd., Shanghai 201804 (CN)
(72) Inventor: YANG, Jian Jean, Shanghai (CN); LIU, Can Tom, Shanghai (CN)
(74) Representative: Vossius & Partner Patentanwälte Rechtsanwälte mbB

(57) **Abstract**

The disclosure relates to a method for sensing synchronization between a plurality of types of sensors, a sensor time synchronization control system, a computer-readable storage medium, an autonomous driving system, and a vehicle. The method includes: S1: aligning the first data unit sensed by each of the one or more first sensors at a first data sensing time; S2: aligning the second data unit sensed by each of the one or more second sensors at a second data sensing time; and S3: adjusting the first data sensing time and/or the second data sensing time to align the two, where at the first data sensing time after alignment, the first data unit sensed by at least one of the one or more first sensors represents a first environmental space, and the second data unit of corresponding at least one of the one or more second sensors represents a second environmental space, and the first environmental space and the second environmental space at least partially overlap.

## Description

### TECHNICAL FIELD

The disclosure relates to the field of system control, and in particular, to a method for sensing synchronization between a plurality of types of sensors, a sensor time synchronization control system, a computer-readable storage medium, an autonomous driving system, and a vehicle.

### BACKGROUND ART

In some scenarios, it is necessary to use a plurality of various types of sensors to obtain various types of sensed data, and the sensed data from the plurality of various types of sensors requires synchronization, i.e., time synchronization. However, due to differences in sensor types, characteristics, usage, manufacturers, brands, and application schemes, even sensors of the same type may struggle to achieve sensing time synchronization, let alone with other types of sensors. For example, for the arrangement of a plurality of cameras and a LiDAR for sensing driving surroundings of a vehicle, frames sensed by every camera need to be synchronized, but cannot be accurately synchronized due to the aforementioned factors. Furthermore, the internal synchronization between the plurality of cameras cannot match the sensing synchronization between other types of sensors (e.g., the LiDAR).

### SUMMARY

In view of the above problems, the disclosure is intended to provide a method for sensing synchronization between a plurality of types of sensors, a sensor time synchronization control system, a computer-readable storage medium, an autonomous driving system, and a vehicle.

In a method for synchronization in a plurality of systems according to a first aspect of the disclosure, the plurality of types of sensors include one or more first sensors and one or more second sensors, the first sensor senses an environment to form a first data unit, the second sensor senses an environment to form a second data unit. The method includes: S 1: aligning the first data unit sensed by each of the one or more first sensors at a first data sensing time; S2: aligning the second data unit sensed by each of the one or more second sensors at a second data sensing time; and S3: adjusting the first data sensing time and/or the second data sensing time to align the two. where at the first data sensing time after alignment, the first data unit sensed by at least one of the one or more first sensors represents a first environmental space, and at the second data sensing time after alignment, the second data unit of corresponding at least one of the one or more second sensors represents a second environmental space, and the first environmental space and the second environmental space at least partially overlap.

According to some embodiments of the disclosure, optionally, step S3 further includes: adjusting the first data sensing time to align with a calibration cycle time point; and adjusting the second data sensing time to align with the calibration cycle time point.

According to some embodiments of the disclosure, optionally, step S3 further includes: adjusting the second data sensing time to align with the first data sensing time.

According to some embodiments of the disclosure, optionally, the first environmental space and the second environmental space at least partially overlapping further includes a center point of the first environmental space coinciding with a center point of the second environmental space.

According to some embodiments of the disclosure, optionally, the one or more first sensors are in one-to-one correspondence with one or more synchronization signal generators that are connected to a common trigger source, and step S 1 further includes: providing, by the common trigger source, a unified trigger signal for the one or more synchronization signal generators; and generating one or more synchronization signals in one-to-one correspondence with each of the one or more first sensors based on the unified trigger signal and according to a calibration delay amount of each first sensor and a synchronization reference point of the corresponding first data unit, to temporally align the first data unit of each of the one or more first sensors.

According to some embodiments of the disclosure, optionally, the synchronization reference point of the first data unit is at a 1/a position of the first data unit, with a being greater than 1.

According to some embodiments of the disclosure, optionally, assuming that a time length of the first data unit sensed by the first sensor is L1, and that a time length of a subsequent first data unit of the first data unit is L2, a compensation delay for the subsequent first data unit is (L1-L2)/a, where step S1 further includes: generating a synchronization signal for the subsequent first data unit for each of the one or more first sensors based on the unified trigger signal and according to the calibration delay amount and the compensation delay, to align the subsequent first data unit of each of the one or more first sensors at the synchronization reference point.

According to some embodiments of the disclosure, optionally, a is equal to 2.

In accordance with some embodiments of the disclosure, optionally, the synchronization reference point of the first data unit is a start time point or an end time point of the first data unit.

According to some embodiments of the disclosure, optionally, the first data unit includes a frame of video data, and a synchronization reference point of the frame includes a time of an exposure center point, a start readout time of an exposure center line, and a start readout time of the frame.

According to some embodiments of the disclosure, optionally, the synchronization signal generator includes an fsync signal generator.

According to some embodiments of the disclosure, optionally, the first sensor or the second sensor includes any one of: a camera, a LiDAR, or a millimeter-wave radar.

A sensor time synchronization control system according to a second aspect of the disclosure includes: a common trigger source; one or more synchronization signal generators configured to receive a unified trigger signal from the common trigger source and provide one or more synchronization signals for one or more sensors on a one-to-one basis; a memory storing instructions; and a processor configured to, when executing instructions, perform the method according to any one of the foregoing embodiments.

According to some embodiments of the disclosure, optionally, the one or more synchronization signal generators provide one or more synchronization signals for one or more first sensors on a one-to-one basis, and the sensor time synchronization control system further includes: one or more phase adjusters configured to perform phase adjustment on one or more second sensors on a one-to-one basis, to adjust a second data sensing time.

According to some embodiments of the disclosure, optionally, the sensor time synchronization control system further includes: a calibration clock source configured to provide the calibration cycle time point for the common trigger source and the one or more phase adjusters.

According to some embodiments of the disclosure, optionally, the calibration cycle time point is every hundredth millisecond point of a network clock.

According to some embodiments of the disclosure, optionally, the sensor time synchronization control system is further configured to regularly send a first data sensing time to the one or more phase adjusters.

A computer-readable storage medium according to a third aspect of the disclosure stores instructions. When the instructions are executed, the method according to any one of the foregoing embodiments is performed.

An autonomous driving system according to a fourth aspect of the disclosure includes the sensor time synchronization control system according to any one of the foregoing embodiments.

A vehicle according to a fifth aspect of the disclosure includes the sensor time synchronization control system according to any one of the foregoing embodiments, or including the autonomous driving system according to any one of the foregoing embodiments.

As described above, according to the method for sensing synchronization between a plurality of types of sensors in the disclosure, by taking into account the delay amount within different sensors due to individual differences (e.g., factory settings, manufacturers, usage, adapted software schemes, models, production batches, application scenario requirements, etc.) in the sensors, and taking into account differences in the sensing frequency of different types of sensors, time synchronization of real-time data reception, sensing, and transmission in a plurality of sensors is performed through triggering of the unified trigger signal, and sensing times of internal synchronization of each type are uniformly adjusted to a unified reference time point to solve the synchronization/alignment of sensing/acquisition times between different types of sensors. This advantageously solves or largely alleviates the defects of using only the back-end synchronization algorithm to compensate for the out-of-sync problem, and improves the accuracy of time synchronization, and in some scenarios, the generation time of the synchronization signal can be dynamically adjusted, which is more flexible.

### BRIEF DESCRIPTION OF THE DRAWINGS

FIG. 1 is a flowchart of a method 100 for sensing synchronization between a plurality of types of sensors according to some embodiments of the disclosure.
FIG. 2 is a schematic diagram of related hardware for implementing the method 100 of FIG. 1 and a sensed data synchronization process according to some embodiments.
FIG. 3 is a schematic diagram of data unit alignment in three example manners according to some embodiments.
FIG. 4 is a schematic diagram of three example synchronization reference points of a video data frame according to some embodiments.
FIG. 5 is a schematic diagram of modules of a sensor time synchronization control system 500 according to some embodiments.
FIG. 6 is a schematic diagram of modules of a sensor time synchronization control system 600 according to some embodiments.

### DETAILED DESCRIPTION OF EMBODIMENTS

Some of the embodiments of the disclosure are described below and are intended to provide a basic understanding of the disclosure. They are not intended to identify key or decisive elements of the disclosure or limit the scope of protection.

For the sake of brevity and illustrative purposes, the principles of the disclosure are mainly described herein with reference to its exemplary embodiments. However, those skilled in the art will readily recognize that the same principles are equivalently applicable to and can be implemented in all types of methods for sensing synchronization between a plurality of types of sensors, sensor time synchronization control systems, computer-readable storage media, autonomous driving systems, and vehicles, and that any such variations do not depart from the true spirit and scope of this patent application.

In addition, in the following description, reference is made to the accompanying drawings, which illustrate specific exemplary embodiments. Without departing from the spirit and scope of the disclosure, these embodiments may be modified in electrical, mechanical, logical, and structural aspects. Furthermore, although the features of the disclosure are disclosed in combination with only one of several implementations/embodiments, if any given or recognizable function may be desired and/or advantageous, this feature can be combined with one or more other features of other implementations/embodiments. Therefore, the following description should not be considered in a limiting sense, and the scope of the disclosure is defined by the appended claims and their equivalents.

The terms such as "have" and "include" indicate that in addition to the units (modules) and steps that are directly and clearly described in the specification and the claims, other units (modules) and steps that are not directly or clearly described are not excluded in the technical solutions of the disclosure.

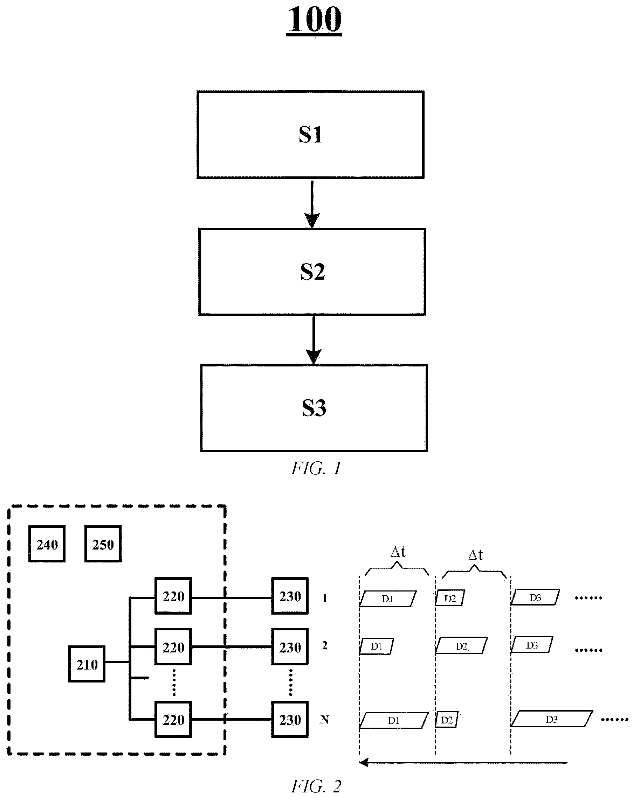

FIG. 1 is a flowchart of a method 100 for time synchronization between a plurality of sensors according to some embodiments of the disclosure. The plurality of types of sensors include one or more first sensors and one or more second sensors. The first sensor senses an environment, for example, at a first data sensing frequency, to form a first data unit, and the second sensor senses an environment, for example, at a second data sensing frequency, to form a second data unit. The first data sensing frequency is different from the second data sensing frequency.

In some examples, the method 100 may be used, for example, for time synchronization between the plurality of types of sensors to cause the plurality of types of sensors to sense/acquire a corresponding sensed environment or object at the same time. The sensor may include, for example, various types such as a camera, a LiDAR, a millimeter-wave radar, a temperature sensor, and a pressure sensor. For ease of description, sensing synchronization between only two types of sensors is shown in the method 100 or the specification. This is also applicable to sensing synchronization between any other two types of sensors, and therefore equally applicable to sensing synchronization between more than two types of sensors.

One or more first sensors and second sensors are provided, which is, for example, applicable to several cameras for surroundings on a vehicle, and applicable to one LiDAR rotationally scanning at a specific frequency. One of the differences between the first sensor and the second sensor is that they sense the environment at different frequencies to form sensed data. Therefore, the first sensor constantly obtains sensed data units at a first data sensing frequency when sensing a sensed object or environment (e.g., a camera obtains image data or each frame of video data at a specific frame rate). The second sensor is similar thereto. It may be understood that if a sensing frequency of the first sensor is greater than that of the second sensor, an interval (cycle) between the data units constantly obtained by the second sensor is greater than that between the data units constantly obtained by the first sensor.

The method 100 for time synchronization between a plurality of types of sensors may include the following steps. Step S 1: Align the first data unit sensed by each of the one or more first sensors at a first data sensing time. Step S2: Align the second data unit sensed by each of the one or more second sensors at a second data sensing time.

The data sensing time alignment between the plurality of first sensors/second sensors may be performed based on properties of the first sensor/second sensor. That is, one sensing time alignment is performed within the plurality of first sensors/second sensors, so that the sensing times of the plurality of first sensors/second sensors are aligned for the same sensing data unit. For example, a plurality of cameras are aligned with respect to the time at which an image is acquired, and a plurality of LiDARs are aligned with respect to the time at which scanned point cloud data is scanned. It may be understood that steps S1 and S2 are not necessarily sequential, but may be performed simultaneously.

Step S3: Adjust the first data sensing time and/or the second data sensing time to align the two. In some examples, a data sensing time of the second sensor may be adjusted with a data sensing frequency (cycle) of the first sensor as a reference, so that the data sensing time of the second sensor is aligned with a data sensing time of the first sensor, or similarly, the data sensing time of the first sensor is adjusted based on a data sensing frequency (cycle) of the second sensor. In some other examples, the first data sensing time and the second data sensing time may be aligned with a calibrated reference. For example, a system clock of the same system (for the first sensor and the second sensor) may be used as such a calibrated reference.

At the first data sensing time after alignment, the first data unit sensed by at least one of the one or more first sensors represents a first environmental space, and at the second data sensing time after alignment, the second data unit of corresponding at least one of the one or more second sensors represents a second environmental space, and the first environmental space and the second environmental space at least partially overlap. That is, for different sensors whose sensed environment contain the same space, the different sensors for the same space may be calibrated with respect to the same spatial coordinate points. In some examples, the mutual alignment of the first data sensing time and the second data sensing time may be calibrated as: making a first data unit sensed by a first sensor in an environmental space for a direction and a second data unit sensed by a second sensor in the same environmental space for the same direction be spatially aligned (e.g., at least partially overlap, center point coincident, etc.) at the finally determined aligned time. For example, in a scenario in which time synchronization of the plurality of cameras and the LiDAR of the vehicle is performed, for a frame of image in front of the vehicle acquired at a time t1 by a camera in front of the vehicle, the method 100 may be used to, for example, enable the LiDAR to also scan exactly the same area in front of the vehicle (e.g., exactly a coordinate position of a center point of the frame of image) at the time t1. In some other examples, a center point of the first environmental space coincides with a center point of the second environmental space, so that a more precise spatial relationship alignment may be performed. For example, a time of an exposure center point of the frame obtained by the camera and representing front of the vehicle corresponds to the time at which the LiDAR scans the center point of the frame area.

In some examples, the method 100 may achieve time synchronization of sensing/acquisition times of the plurality of types of sensors on the basis of achieving spatial alignment (coincident or partially overlap) of the plurality of types of sensors to achieve perceptual fusion between different types of sensing technologies. In some other examples, the method 100 may be performed regularly, for example, performed periodically according to a cycle of the calibration cycle time point, and the method 100 may be performed once at the arrival of each calibration cycle time point, to achieve sensing time alignment among a plurality of types of sensors throughout the sensing process. The sensing synchronization and perceptual fusion of the plurality of types of sensors is applicable to various scenarios, such as vehicle measurement of a driving process (e.g., image acquisition and point cloud data acquisition of driving surroundings by the camera and the LiDAR), measurement of sweeping surroundings by a robot vacuum cleaner (e.g., a camera with a radar, a thermal sensor, a proximity sensor, etc.), and so on.

In some embodiments, step S3 of the method 100 may further include: adjusting the first data sensing time to align with a calibration cycle time point; and adjusting the second data sensing time to align with the calibration cycle time point. Therefore, the calibration cycle time point may be used as a reference for mutual alignment between the plurality of types of sensors. The calibration cycle time point may use a system clock, such as a system clock (e.g., a precision time protocol (PTP)-based clock, a coordinated universal time (UTC)-based clock) of a control system of an on-board sensor, an autonomous driving system, an on-board computer, etc. The plurality of types of sensors are all under the same system clock. An alignment interval time of the calibration cycle time point may be set, for example, with every ten or hundred cycles of the system clock as an interval. That is, in some examples, the first data sensing time aligned within the one or more first sensors may be aligned to a time point of, for example, every hundredth clock cycle (e.g., the 100th cycle, the 200th cycle..., etc. of the clock count) of the system clock, and the second data sensing time aligned within the one or more second sensors is also aligned to a time point of every hundredth clock cycle of the system clock, thereby achieving the sensing time alignment between the first sensor and the second sensor.

In some embodiments, step S3 of the method 100 may further include: adjusting the second data sensing time to align with the first data sensing time. Therefore, a sensing time of a sensor (e.g., the first data sensing time aligned within a plurality of first sensors) itself may be used as a reference for mutual alignment between the plurality of types of sensors. In some examples, the data sensing frequency of the first sensor is greater than the data sensing frequency of the second sensor, and therefore may be used as a reference for alignment of the second sensor, i.e., the sensing time of the second sensor may be aligned to a periodic sensing time point of the first sensor (e.g., one alignment of the second sensor to the first sensor may be performed every 10 sensing times of the first sensor).

In some embodiments, the internal alignment of the one or more of the same type of (first or second) sensors in step S1 is described below with the internal time synchronization of the plurality of first sensors as an example. For example, a hardware combination of one common trigger source plus a plurality of synchronization signal generators may be set. The plurality of first sensors are in one-to-one correspondence with the plurality of synchronization signal generators, which are connected to the common trigger source, and the plurality of first sensors have the same data sensing frequency (i.e., the first data sensing frequency).

That is, the one or more first sensors are in one-to-one correspondence with the one or more synchronization signal generators, which are connected to the common trigger source, and step S 1 further includes: first, providing, by the common trigger source, a unified trigger signal for the one or more synchronization signal generators. The common trigger source is configured to send a trigger signal at a specified cycle and time, and the common trigger source provides a unified trigger signal to each synchronization signal generator, which times/counts the specific sensors it targets and then sends timing control, so that timing control synchronization of the plurality of first sensors can be guaranteed. Then, step S 1 includes: generating one or more synchronization signals in one-to-one correspondence with each of the one or more first sensors based on the unified trigger signal and according to a calibration delay amount of each first sensor and a synchronization reference point of the corresponding first data unit, to temporally align the first data unit of each of the one or more first sensors. A delay amount within each of the plurality of first sensors may be learned based on information such as type, factory settings, parameter, and manufacturer of the first sensor, so that a magnitude of a calibration delay amount applied by the synchronization signal generator for the first sensor may be determined. Then, when a first data unit sensed by the plurality of first sensors (e.g., a frame in the sensed video data) needs to be aligned with a synchronization reference point of the first data unit as a reference, basic parameters required are a time of the unified trigger signal, a time of the synchronization reference point, and the magnitude of the calibration delay amount.

For example, even for the same supplier, synchronization modes based on an external signal line (i.e., delays such as a response step to the external signal line, a behavior, an internal line, etc.) supported by the first sensors of different models are different. For example, for a first sensor, assuming that the time of the unified trigger signal is T1 and an internal delay of the first sensor is ΔT, and if the sensor needs to be aligned with another first sensor, an expected aligned time (synchronization reference point) is set as T2. In this case, the magnitude of the calibration delay amount applied by the synchronization signal generator is T2-T1. It may be understood that since the synchronization reference point for alignment is not necessarily a start point of the first received or sensed first data unit (data part), T2-T1 is greater than or equal to ΔT. Certainly, in this example, only the internal delay ΔT of the first sensor and the synchronization reference point time T2 are taken into account, but it may be understood that there may be other delays, for example, there may be a slight difference in the delays on the line from the common trigger source to each synchronization signal generator. This difference may also be included in the calculation.

In this way, different calibration delay amounts that need to be adjusted or applied by each synchronization signal generator may be flexibly adjusted based on different synchronization reference points, so that the first data units received or sensed by the plurality of first sensors for the same object or at the same time are aligned. This active and dynamically adjustable alignment synchronization manner at the front end of the sensor avoids or greatly reduces the complexity and processing pressure of the synchronization algorithm for back-end data processing.

FIG. 2 is a schematic diagram of a corresponding hardware combination that synchronizes and aligns data sensing times within a plurality of first sensors according to some embodiments, including a schematic diagram of modules of a sensor time synchronization control system according to some embodiments. In FIG. 2, the sensor time synchronization control system includes a common trigger source 210 and a plurality of synchronization signal generators 220, the common trigger source 210 is connected to N synchronization signal generators 220 (N is a positive integer greater than or equal to 2), and each synchronization signal generator 220 is connected to one first sensor 230. Each first sensor 230 senses an object (e.g., surroundings of a vehicle), to obtain sensed data, which may be received or sensed, for example, in a plurality of parts (e.g., a plurality of first data units D1 to D3, etc.). For example, a camera captures an image of an environment and sends a plurality of consecutive frames to the system. The objective is that the first data units of the first sensors at the same time or in the same order need to be synchronized and aligned, where the first sensors have the same data sensing frequency (e.g., a video acquisition frame rate) for the first data units, with an interval time (cycle) of Δt.

In addition, the sensor time synchronization control system may further include a processor 240 and a memory 250 storing instructions. The processor 240 is configured to, when executing the instructions, perform the steps of the method 100 according to the embodiments of the specification.

For example, the 1^{st} first data unit D1 of the 1^{st} first sensor 230, the 1^{st} first data unit D1 of the 2^{nd} first sensor 230, the 1^{st} first data unit D1 of the 3^{rd} first sensor 230..., the 1^{st} first data unit D1 of the N^{th} first sensor 230 in FIG. 2 all need to be aligned to a synchronization reference point (e.g., it is pre-specified that if a start point (start time) of each first data unit is aligned, the first data unit is aligned). The first data unit D1 sensed or received by each first sensor is, for example, of a different length (duration). Similarly, the 2nd first data unit D2 of the 1st first sensor 230, the 2nd first data unit D2 of the 2nd first sensor 230, the 2nd first data unit D2 of the 3rd first sensor 230..., the 1st first data unit D2 of the N^{th} first sensor 230 are also all aligned to the synchronization reference point. The first data unit D2 sensed or received by each first sensor is, for example, of a different length (duration). The first data unit D3 is similar to the subsequent other data units. By analogy, since each first sensor has a consistent data sensing frequency, if a start point (synchronization reference point) of each first data unit D1 is aligned, the subsequent D2, D3..., are also aligned, regardless of the length of each first data unit (e.g., D2 and D1 are different in duration).

It should be noted that the first data unit herein is a previously sensed/acquired data unit, while the second data unit is a data unit sensed/acquired immediately following the first data unit. It is not necessarily that the first data unit is the first sensed/acquired data unit, and the second data unit is the second sensed/acquired data unit.

In some embodiments, the synchronization reference point of the first data unit may be a 1/a position of the data unit, with a being greater than 1. This means that the synchronization reference point may actually be located at any time within the duration of the first data unit. The position of the synchronization reference point may be adjusted as required. For example, if a = 3 and the duration of the first data unit is T_{D}, the synchronization reference point may be at the T_{D}/3 position (time point).

Further, assuming that the time length of the first data unit sensed by the sensor is L1 and the time length of the subsequent first data unit of the first data unit is L2, the compensation delay for the subsequent first data unit is (L1-L2)/a. The performing internal time alignment on the plurality of first sensors further includes: generating a synchronization signal for the subsequent first data unit for each of the one or more first sensors based on the unified trigger signal and according to the calibration delay amount and the compensation delay, to align the subsequent first data unit of each of the one or more first sensors at the synchronization reference point. In some embodiments, a start point (time point) or end point (time point) of the first data unit may not be directly used as the synchronization reference point, but a point/time in the duration of the entire first data unit may be used as the synchronization reference point. Since there may be a difference in duration of the first data units sequentially received or sensed by the same first sensor, if no compensation delay is applied for the difference in duration, it may result in that although the first received or sensed first data unit can be temporally aligned on all first sensors with respect to the synchronization reference point, time synchronization is no longer achieved when the duration of the subsequently received or sensed first data unit changes. Therefore, assuming that the length of the first data unit received or sensed previously and temporally aligned is L 1, and the length of the immediately following first data unit that has not been temporally aligned is L2, for the synchronization signal generator corresponding to the sensors of the two first data units, another compensation delay with the magnitude of (L 1-L2)/a still needs to be applied for the immediately following first data unit.

In some embodiments, a is equal to 2. That is, the center point of each first data unit is used as a synchronization reference point for time alignment, and the alignment of the center point is more favorable to the synchronization effect of different first data unit lengths of different first sensors.

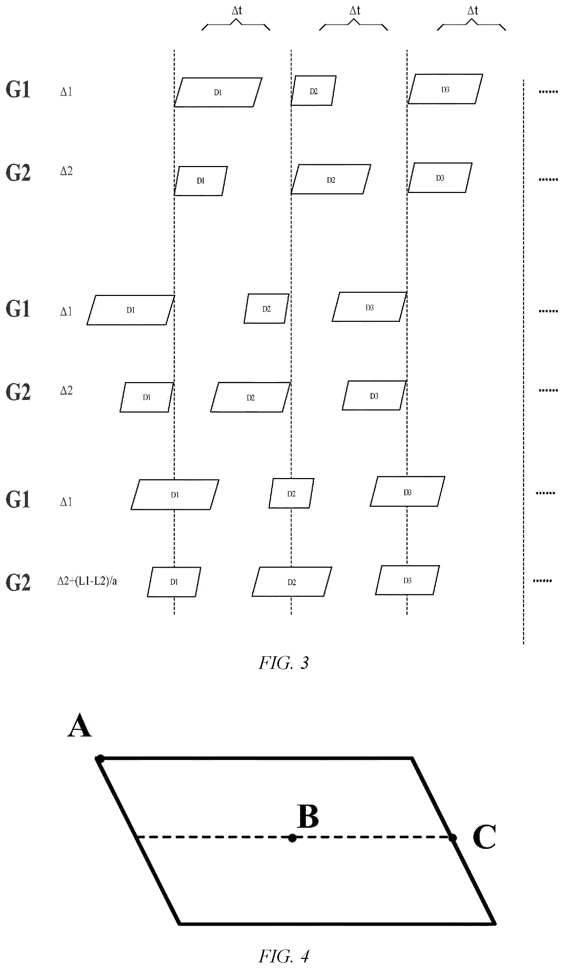

Reference is made to FIG. 3, which is a schematic diagram of first data unit alignment in three example manners according to some embodiments. The figure shows first data unit alignment using a start point, an end point, and a center point of a first data unit (i.e., a=2) as an example. Only the alignment of two first sensors is shown for convenience, and any other number of first sensors is equally applicable. In FIG. 2, a cycle length (interval time) corresponding to the first data sensing frequency is Δt. When the start point (start time point) is used as the synchronization reference point (upper part of FIG. 3), the common trigger source provides a unified trigger signal for the synchronization signal generators G1 and G2, which generally take into account the calibration delay amounts Δ1 and Δ2 of the corresponding first sensors 1 and 2, and therefore may, for example, take into account the time of the unified trigger signal and the calibration delay amounts Δ1 and Δ2, to align the data units of the first sensors 1 and 2. Then, each subsequent first data unit still maintains a fixed interval size from the previous first data unit (i.e., maintains a fixed data sensing frequency). When the end point (end time point) is used as the synchronization reference point (middle part of FIG. 3), similar to the start point as the synchronization reference point, it is generally possible to take into account only the calibration delay amounts Δ1 and Δ2 of the first sensors 1 and 2. Each subsequent first data unit can still maintain a fixed interval size from the previous first data unit.

When the center point is used as the synchronization reference point (lower part of FIG. 3), some delay compensation may need to be taken into account. As shown in the figure, after the 1^{st} first data unit is aligned with respect to the center point, in order to maintain a fixed first data sensing frequency, the magnitude of the delay may need to be further adjusted. Referring to the upper part of FIG. 3, the 1^{st} first data unit in the lower part of FIG. 3 is shifted left by L1/2 (i.e., L1/a), and if no delay compensation is applied, the subsequent second first data unit is shifted left only by L 1/2, resulting in a failure of the second first data unit in aligning between the sensors 1 and 2 with respect to the center point. What is required is to shift the second data unit left by L2/2 instead of by L1/2. Therefore, on the basis of a shift of L1/2, only a shift of L1/2-L2/2 (i.e., (L1-L2)/a, and a=2) is further required. If L1/2-L2/2 is positive (i.e., the case of L1 > L2), a right shift is required, and if L1/2-L2/2 is negative (i.e., the case of L1 < L2), a left shift is required. Therefore, the magnitude of the compensation delay to be applied is (L1-L2)/2, and the total delay amount of the sensor is Δ2+ (L1-L2)/2 (where the negative and positive of (L1-L2)/2 may represent whether the compensation delay is shifted left or right, or represent whether a delay or an advance is required). Next, for a data unit D3 (assuming having a length of L3), since D3 is also shifted when D2 is shifted, the relative relationship between D2 and D3 is not affected by the shift of D2. Therefore, a compensation delay amount of D3 relative to D2 is applicable with reference to the compensation delay amount of D2 relative to D1, i.e., D3 relative to the delay to be compensated is (L2-L3)/2. It may be understood that if subsequent data units are of different lengths, the subsequent data units need to be compensated for delays and aligned each time, and the compensation delays applicable to D1 to D3 are equally applicable.

In an embodiment in which the first sensor is an image acquisition device such as a camera, the first data unit includes a frame of video data, and a synchronization reference point of the frame includes a time of an exposure center point, a start readout time of an exposure center line, and a start readout time of the frame. That is, in order for a plurality of synchronization signal generators to synchronously receive or sense frames that are constantly sensed and sent back to the system, the method 100 is used for operation. As a schematic diagram of three example synchronization reference points of a video data frame according to some embodiments shown in FIG. 4, a duration of the frame may be, for example, an exposure time. In FIG. 4, point A is the start readout time of exposure (e.g., corresponding to the start time point above), point B is the time of the exposure center point (e.g., corresponding to the center point above), and point C is the start readout time of the exposure center line (e.g., corresponding to the end time point in the above). It may be understood that the synchronization reference point is not limited to the three types, but any time in the exposure time may be used as the synchronization reference point, the magnitude of the supplemental delay applied for subsequent frames may be obtained based on the position denoted by a of the synchronization reference point.

In some embodiments, the first sensor above includes a camera. This applies particularly to frame data synchronization during image acquisition by a plurality of cameras. For example, in a high-speed driving scenario, it is possible to not only perform synchronous reception or sensing of frame data based on the back-end synchronization algorithm, but also complete data reception or sensing synchronization to some extent at a plurality of front-end cameras, thereby greatly improving the speed and accuracy of the synchronization.

It may be understood that the internal alignment of a plurality of first sensors is only exemplified herein for ease of description, and the internal time of a plurality of second sensors is equally applicable. For example, a plurality of cameras use the internal time synchronization process above, and a plurality of LiDARs (or a plurality of millimeter-wave radars) may also use the same internal time synchronization process above.

In some embodiments, the synchronization signal generator includes an fsync signal generator. Particularly, for timing synchronization of a plurality of cameras, the fsync signal generator may be used to time/count the unified trigger signal from the common trigger source to apply a calibration delay amount for a specific camera, thereby achieving external synchronization control. Therefore, in an embodiment in which a start time point or an end time point is used as a synchronization reference point, although the cameras may be from different suppliers, all sensors (e.g., cameras) may use one fsync line for external synchronization control; or several cameras share one single fsync for one group for external synchronization control, thereby reducing the hardware cost of implementing the embodiments of the disclosure.

The description herein for the same type of first sensors may also include, for example, the following content, and the same type of first sensors (e.g., various cameras) may have different attributes such as brands, suppliers, and production batches. Therefore, there may be differences in the calibration delay amount of the same type of first sensors. Therefore, the calibration delay amount may refer to a delay time/timing/count length or an applied phase difference that is set in consideration of different properties, usage, or different attributes of the first sensors and that needs to be taken into account when the first sensor synchronizes timing with other first sensors. The calibration delay amount may be, for example, provided by a supplier or pre-determined by a staff member on a case-by-case basis.

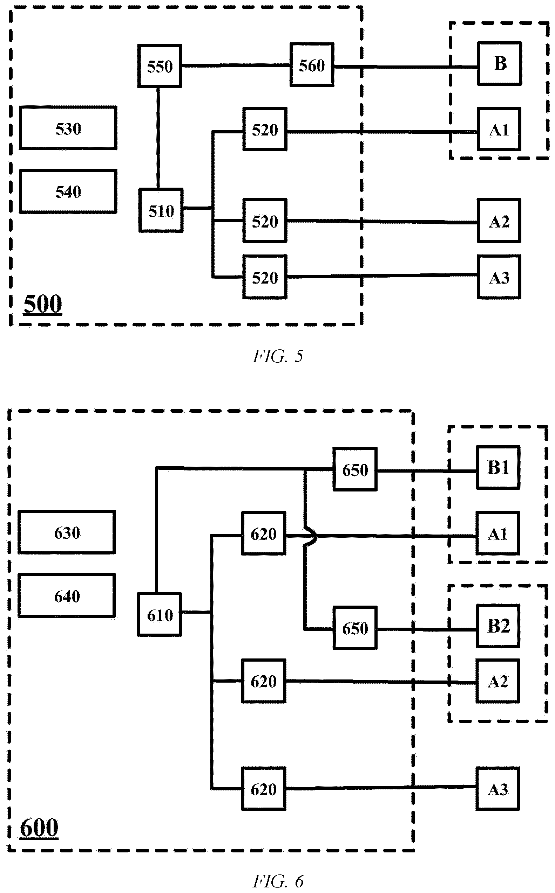

FIG. 5 is a schematic diagram of modules of a sensor time synchronization control system 500 according to some other embodiments. The sensor time synchronization control system 500 includes: a common trigger source 510; one or more synchronization signal generators 520 configured to receive a unified trigger signal from the common trigger source and provide one or more synchronization signals for one or more first sensors A (three, A1 to A3, are shown in the figure) on a one-to-one basis; a memory 530 storing instructions; a processor 540 configured to perform, when executing the instructions, the steps of the method 100 according to the embodiments of the specification; a calibration clock source 550; and a phase adjuster 560 configured to perform phase adjustment on a second sensor B (one is shown in the figure for ease of description) to adjust a second data sensing time of the second sensor.

In FIG. 5, data sensing times are first synchronized for the three first sensors A1 to A3. For details, reference can be made to the internal time synchronization process of a plurality of first sensors described above. The calibration clock source 550 sends a calibration cycle time point to the common trigger source 510. For example, the calibration clock source 550 may be configured to provide a PTP time for the common trigger source 510 and transmit the PTP time to the common trigger source 510. The common trigger source 510 and a corresponding synchronization signal generator adjust the internally aligned sensing times of all the first sensors A1 to A3 to the calibration cycle time point (e.g., at every hundredth millisecond of a PTP time, such as at the 100^{th} ms, the 200^{th} ms, ..., etc.). For example, a delay amount or an advance amount may be further applied to the sensing times of all the first sensors for adjustment. The calibration cycle time point is, for example, a system clock within the same system that supports the operation of the first sensors A1 to A3 and the second sensor B, so that the system clock may be directly reused as a reference for adjusting the sensing time, thereby providing a stable and fixed calibration cycle time point as a reference. For example, the system clock at every hundredth millisecond of the PTP clock in a specific scenario (such as sensing synchronization between an on-board camera and a LiDAR) is more consistent with a sensing cycle of the LiDAR and also more stable, facilitating the subsequent regular alignment and calibration processes of the plurality of types of sensors.

In some examples, it is also possible to compare whether the difference between the sensing time aligned within the first sensor and the calibration cycle time point exceeds a threshold (e.g., exceeds 1 ms), and set that no adjustment is made if the difference does not exceed the threshold, to avoid triggering overly frequent and sensitive adjustment processes. It may be understood that, to adapt to the solution described herein for regularly adjusting the sensing time alignment, it is also possible to set to regularly compare the difference between the sensing time and the calibration cycle time point with a threshold, make no adjustment if the difference does not exceed the threshold, and continue to make the comparison and determine whether to adjust again after a period of time.

At the same time, the calibration clock source 550 may be configured to provide the PTP time for the phase adjuster 560, so that the sensing time of the second sensor B is adjusted to the calibration cycle time point consistent with the first sensors A1 to A3 (e.g., at every hundredth millisecond of the PTP time, such as at 100 ms, at 200 ms..., etc.). For example, a delay amount or advance amount may be further applied to the sensing time of the second sensor for adjustment. In some examples, it is also possible to compare whether the difference between the sensing time of the second sensor and the calibration cycle time point exceeds a threshold (e.g., exceeds 1 ms), and set that no adjustment is made if the difference does not exceed the threshold, to avoid triggering overly frequent and sensitive adjustment processes.

In this way, the first sensors A1 to A3 and the second sensor B achieve the sensing/acquisition synchronization at the calibration cycle time point. On this basis, the first sensor A1 and the second sensor B in the dashed box in FIG. 5 are for the same environmental space (or the environmental spaces partially overlap). Therefore, the synchronization time of the entire sensor time synchronization control system 500 may be further adjusted, so that the sensing time (set as t2) aligned by the first sensors A1 to A3 and the second sensor B simultaneously brings the first sensor A1 into spatial alignment with the second sensor B. That is, the environmental space represented by the data unit sensed by the first sensor A1 at t2 at least partially overlaps with the environmental space represented by the data unit sensed by the second sensor B at t2. For example, if a frame sensed by an example camera A1 at t2 represents an image in front of a vehicle, an example LiDAR B also senses at t2 a position in the image in front of the vehicle (e.g., a spatial center point, or a time of an exposure center point corresponding to the frame sensed by the camera A1).

FIG. 6 is a schematic diagram of modules of a sensor time synchronization control system 600 according to some other embodiments. The sensor time synchronization control system 600 includes: a common trigger source 610; one or more synchronization signal generators 620 configured to receive a unified trigger signal from the common trigger source and provide one or more synchronization signals for one or more first sensors A (three, A1 to A3, are shown in the figure) on a one-to-one basis; a memory 630 storing instructions; a processor 640 configured to perform, when executing the instructions, the steps of the method 100 according to the embodiments of the specification; and a phase adjuster 650 configured to perform phase adjustment on the second sensors B1-B2 to adjust a second data sensing time of the second sensor B 1-B2.

In FIG. 6, data sensing times are first synchronized for the three first sensors A1 to A3. For details, reference can be made to the internal time synchronization process of a plurality of first sensors described above. The common trigger source 610 and/or the synchronization signal generator 620 of the sensor time synchronization control system 600 may be configured to latch (e.g., with a latch module or latch function) the first data sensing time of internal time synchronization of the one or more first sensors A1 to A3, and the common trigger source 610 and/or the synchronization signal generator 620 of the sensor time synchronization control system 600 is further configured to regularly (e.g., periodically) send the latched first data sensing time (e.g., a timestamp) to the phase adjuster 650. For ease of description, FIG. 6 only shows the common trigger source 610 latching and periodically sending the first data sensing time. Alternatively, the common trigger source 610 and/or the synchronization signal generator 620 of the sensor time synchronization control system 600 may be configured to latch a system time point or natural time point corresponding to the first data sensing time and periodically send the system time point or natural time point to the phase adjuster 650. The phase adjuster 650 adjusts the second sensors B1-B2 based on the first data sensing time (or corresponding system time point or natural time point ), to align the data sensing times of the second sensors B1-B2 with the first data sensing time. In some examples, it is also possible to compare whether the difference between the sensing time of the second sensor and the first data sensing time exceeds a threshold (e.g., exceeds 1 ms), and set that no adjustment is made if the difference does not exceed the threshold, to avoid triggering overly frequent and sensitive adjustment processes.

In this way, the first sensors A1 to A3 and the second sensors B1 to B2 achieve the sensing/acquisition synchronization at the sensing time. On this basis, the first sensor A1 and the second sensor B1 in the dashed box in FIG. 6 are for the same environmental space (or the environmental spaces partially overlap), and the first sensor A2 and the second sensor B2 are for the same environmental space (or the environmental spaces partially overlap). Therefore, the synchronization time of the entire sensor time synchronization control system 600 may be further adjusted, so that the sensing time (set as t3) aligned by the first sensors A1 to A3 and the second sensors B1-B2 simultaneously brings the first sensor A1 into spatial alignment with the second sensor B 1, and the first sensor A2 into spatial alignment with the second sensor B2. That is, the environmental space represented by the data unit sensed by the first sensor A1 at t3 at least partially overlaps with the environmental space represented by the data unit sensed by the second sensor B1 at t3, and the environmental space represented by the data unit sensed by the first sensor A2 at t3 at least partially overlaps with the environmental space represented by the data unit sensed by the second sensor B2 at t3. For example, if a frame sensed by an example camera A1 at t3 represents an image in front of a vehicle, an example LiDAR B 1 also senses at t3 a position in the image in front of the vehicle (e.g., a spatial center point, or a time of an exposure center point corresponding to the frame sensed by the camera A1). If the frame sensed by the example camera A2 at t3 represents an image in rear of the vehicle, the example LiDAR B2 also senses at t3 a position in the image in rear of the vehicle (e.g., the spatial center point, or the time of the exposure center point corresponding to the frame sensed by the camera A2).

In addition, since the latched first data sensing time (e.g., a timestamp) is sent to the phase adjuster 650 regularly (e.g., periodically), the sensing time between the plurality of types of sensors may be calibrated synchronously regularly, so that the sensor obtains the calibrated sensing time in real time during use, further improving the time synchronization of the sensor time synchronization control system during use.

According to another aspect of the disclosure, a computer-readable storage medium storing instructions is further provided. When the instructions are executed, the method 100 according to any one of the embodiments of the disclosure is performed.

The computer-readable storage medium, the memory, and the storage unit in the disclosure include various types of computer-readable storage media, and may be any usable medium accessible to a general-purpose or special-purpose computer. For example, the computer-readable medium may include a RAM, a ROM, an EPROM, an E²PROM, a register, a hard disk, a removable hard disk, a CD-ROM or another optical memory, a magnetic disk memory or another magnetic storage device, or any other transitory or non-transitory media that can carry or store expected program code having an instruction or data structure form and be accessible to the general-purpose or special-purpose computer or a general-purpose or special-purpose processor. A combination thereof shall also fall within the scope of protection of the computer-readable media. An exemplary storage medium is coupled to a processor, so that the processor can read information from and write information to the storage medium. In an alternative solution, the storage medium may be integrated into the processor. The processor and the storage medium may reside in an ASIC. The ASIC may reside in a user terminal. In an alternative solution, the processor and the storage medium may reside as discrete assemblies in a user terminal.

According to another aspect of the disclosure, an autonomous driving system is further provided. The autonomous driving system includes the sensor time synchronization control system according to any one of the foregoing embodiments. The autonomous driving system may include, for example, an advanced driving assistance system (ADAS) system or other driving systems to achieve the high level functional safety requirements for fail-operation.

According to yet another aspect of the disclosure, a vehicle including the autonomous driving system according to any one of the embodiments of the disclosure or a vehicle including the sensor time synchronization control system according to any one of the embodiments of the disclosure is further provided. The vehicle in the disclosure is intended to indicate any suitable vehicle having a drive system, for example, a fuel powered vehicle, a hybrid vehicle, an electric vehicle, a plug-in hybrid electric vehicle, and the like.

The above mainly describes the method for sensing synchronization between a plurality of types of sensors, the sensor time synchronization control system, the computer-readable storage medium, the autonomous driving system, and the vehicle according to the disclosure. Although only some specific embodiments of the disclosure are described, those of ordinary skill in the art should understand that the disclosure may be implemented in many other forms without departing from the essence and scope of the disclosure. Therefore, the presented examples and implementations are deemed as illustrative rather than restrictive, and without departing from the spirit and scope of the disclosure defined by the appended claims, the disclosure may cover various modifications and substitutions.

## Claims

1. A method for sensing synchronization between a plurality of types of sensors, wherein the plurality of types of sensors comprise one or more first sensors and one or more second sensors, the first sensor senses an environment to form a first data unit, and the second sensor senses an environment to form a second data unit, the method comprising the following steps:
S1: aligning the first data unit sensed by each of the one or more first sensors at a first data sensing time;
S2: aligning the second data unit sensed by each of the one or more second sensors at a second data sensing time; and
S3: adjusting the first data sensing time and/or the second data sensing time to align the two,
wherein at the first data sensing time after alignment, the first data unit sensed by at least one of the one or more first sensors represents a first environmental space, and at the second data sensing time after alignment, the second data unit of corresponding at least one of the one or more second sensors represents a second environmental space, and the first environmental space and the second environmental space at least partially overlap.

2. The method according to claim 1, wherein step S3 further comprises:
adjusting the first data sensing time to align with a calibration cycle time point; and adjusting the second data sensing time to align with the calibration cycle time point.

3. The method according to claim 1or 2, wherein step S3 further comprises:
adjusting the second data sensing time to align with the first data sensing time.

4. The method according to claim 1, 2, or 3, wherein the first environmental space and the second environmental space at least partially overlapping further comprises a center point of the first environmental space coinciding with a center point of the second environmental space.

5. The method according to any one of claims 1 to 4, wherein the one or more first sensors are in one-to-one correspondence with one or more synchronization signal generators that are connected to a common trigger source, and step S 1 further comprises:
providing, by the common trigger source, a unified trigger signal for the one or more synchronization signal generators; and
generating one or more synchronization signals in one-to-one correspondence with each of the one or more first sensors based on the unified trigger signal and according to a calibration delay amount of each first sensor and a synchronization reference point of the corresponding first data unit, to temporally align the first data unit of each of the one or more first sensors.

6. The method according to claim 5, wherein the synchronization reference point of the first data unit is at a 1/a position of the first data unit, with a being greater than 1.

7. The method according to claim 5 or 6, wherein assuming that a time length of the first data unit sensed by the first sensor is L1, and that a time length of a subsequent first data unit of the first data unit is L2, a compensation delay for the subsequent first data unit is (L1-L2)/a, wherein step S1 further comprises:
generating a synchronization signal for the subsequent first data unit for each of the one or more first sensors based on the unified trigger signal and according to the calibration delay amount and the compensation delay, to align the subsequent first data unit of each of the one or more first sensors at the synchronization reference point.

8. The method according to claim 6 or 7, wherein a is equal to 2.

9. The method according to any one of claims 5 to 8, wherein the synchronization reference point of the first data unit is a start time point or an end time point of the first data unit.

10. The method according to any one of claims 5 to 9, wherein the first data unit comprises a frame of video data, and a synchronization reference point of the frame comprises a time of an exposure center point, a start readout time of an exposure center line, and a start readout time of the frame.

11. The method according to any one of claims 5 to 10, wherein the synchronization signal generator comprises an fsync signal generator.

12. The method according to any one of claims 1 to 11, wherein the first sensor or the second sensor comprises any one of: a camera, a LiDAR, or a millimeter-wave radar.

13. A sensor time synchronization control system, comprising:
a common trigger source;
one or more synchronization signal generators configured to receive a unified trigger signal from the common trigger source and provide one or more synchronization signals for one or more sensors on a one-to-one basis;
a memory storing instructions; and
a processor configured to execute the instructions to perform the method according to any one of claims 1 to 12.

14. The sensor time synchronization control system according to claim 13, wherein the one or more synchronization signal generators provide one or more synchronization signals for the one or more first sensors on a one-to-one basis, and the sensor time synchronization control system further comprises:
one or more phase adjusters configured to perform phase adjustment on the one or more second sensors on a one-to-one basis, to adjust the second data sensing time.

15. The sensor time synchronization control system according to claim 13 or 14, further comprising:
a calibration clock source configured to provide the calibration cycle time point for the common trigger source and the one or more phase adjusters.

16. The sensor time synchronization control system according to claim 15, wherein the calibration cycle time point is every hundredth millisecond point of a network clock.

17. The sensor time synchronization control system according to claim 14, 15, or 16, wherein the sensor time synchronization control system is further configured to regularly send the first data sensing time to the one or more phase adjusters.

18. A computer-readable storage medium storing instructions that, when executed by a processor, cause the processor to perform the method according to any one of claims 1 to 12.

19. An autonomous driving system, comprising the sensor time synchronization control system according to any one of claims 13 to 17.

20. A vehicle, comprising the sensor time synchronization control system according to any one of claims 13 to 17 or the autonomous driving system according to claim 19.
